# EUROPEAN PATENT APPLICATION

(11) **EP 3 020 693 A1**
(43) Date of publication of application: **18.05.2016**
(21) Application number: 13898354.9
(22) Date of filing: 28.11.2013
(51) Int. Cl.: C04B 33/16, C04B 33/30, B28C 1/16, B28C 1/22

(54) **METHOD FOR THE PRODUCTION OF GRANULES FOR MANUFACTURING CERAMIC TILES**

(71) Applicant: Cales De La Plana S.A., 12592 Chilches (Castellón) (ES)
(72) Inventor: VASSEUR, Nicolas, E-46183 L'Eliana (Valencia) (ES); FLORS GARCIA, Juan Ramón, E-12003 Castellón (ES); DE LA PEÑA ELIZALDE, Alejandro, E-20006 San Sebastián (ES); MIRALLES ROIG, Cesar, E-12200 Onda (Castellón) (ES); GIL ABALAT, Carlos, Castellón de la Plana (ES); MARTI SEGARRA, Joaquin Emilio, Vall d'Uixó 12600 (Castellón) (ES); GARCIA TEN, Francisco Javier, E-12006 Castellón (ES); QUEREDA VAZQUEZ, Francisca, E-12006 Castellón (ES)
(74) Representative: Ezcurra Zufia, Maria Antonia
(86) International application number: PCT/ES2013/070827
(87) International publication number: WO 2015/079077

(57) **Abstract**

The invention relates to a method comprising the followings steps: triturating and mixing raw materials, including calcareous clays, non-calcareous clays, feldspar, quartz, kaolin, calcite and dolomite; adding hydrated and unhydrated calcines which can be any or a combination of calcined dolomite, hydrated calcined dolomite, sintered dolomite, quicklime, calcium hydroxide, sintered lime, or a mixture thereof, and which may also include calcite or dolomite; granulating with a quantity of water of between 1 and 20%; and obtaining the optimum moisture content by means of drying, for the subsequent pressing of the solid granule under optimum conditions. The method according to the invention reduces the consumption of water during the process of mixing the raw materials by grinding, and reduces the consumption of energy used in the drying of the granules and the firing cycles, as well as reducing CO2 emissions into the atmosphere

## Description

### SUBJECT MATTER OF THE INVENTION

It is the object of the present invention, as the title of the invention states, a procedure to obtain some granules for the manufacture of ceramic tiles, as well as granules obtained for such procedure.

The granules object of the invention are characterized by the particularity of their composition, which is of such a nature that the amount of water and drying energy needed for their conformation, are reduced in a significant way in relation to the process, through a wet process, which is currently exploited.

Therefore, this invention is circumscribed within the scope of raw materials for the manufacture of ceramic tiles, as well as among the procedures of manufacture of ceramic tiles.

### BACKGROUND OF THE INVENTION

The process of manufacture of ceramic tiles starts with the selection of raw materials which must be part of the composition of a paste, which is basically clay, feldspar, sand, carbonate and kaolin. In the traditional ceramic industry, raw materials are generally used, as-mined or after some minor treatment. As natural raw materials are involved, preliminary homogenisation is required in most cases to ensure consistent characteristics. Once raw materials are homogenised, a process takes place with the aim of obtaining a composition of the raw materials that include CaO (calcium oxide).

The CaO is an active component needed in the granules, to generate the ceramic compounds required for the chemical combination with silica, alumina and the rest of raw materials, during the firing cycle at the temperature which causes its combination. This component can be inserted in several ways, through the addition of CaCO₃, as non-carbonate precursor, through direct supply of CaC or Ca(OH)₂, the last one as precursor as well, but in this case, hydrated.

Due to reasons linked to the process, in the method through wet process, CaCO₃ is used as precursor of the needed CaO, which is obtained during the firing stage, when decarbonation temperature of 900°C is reached. Previously, the smooth paste mixture of raw materials with CaCO₃, must be dried by a spray process. The large amount of water which acts as a mean for grinding and for raw material transportation, must evaporate, to obtain finally the spray-dried powder, after passing through the atomizer. Thus, spray-dried powder designates the granule obtained by wet process.

The spray-dried powder or granules obtained through wet process are submitted to pressing and afterwards to a firing cycle, where the decarbonation of the carbonate takes place at a temperature of around 900°C, obtaining the CaO, which can be combined with the rest of raw materials, for the obtention of the ceramic compounds. In the decarbonation process CO₂ is emitted in the atmosphere.

The time of residence for the decarbonation temperature, must be long enough to produce the complete decarbonation of the carbonate supplied and thus prevent the creation of bubbles in the enamelling, achieving a uniform enamelling.

The spray-dried powder, or granules obtained through wet process, are granules which are empty.

In the spray process, the energetic consumption has more importance in relation to the one shown in the following paragraph (dry process), due to the large amount of water that has to evaporate, leading to the emission of CO₂ by decarbonation of the carbonate supplied. Another characteristic of this wet process, in addition to the high consumption of water and energy, is the long time required, due to its role as production process, during the wet grinding stage of raw material, the drying stage to obtain the spray-dried powder, the firing cycle, to produce a complete decarbonation, with the aim of obtaining a suitable enamelling. The decarbonation of the carbonate at 900°C is a critical stage of the firing cycle eluded in the new modality proposed through dry process, being able to integrate the calcined previously decarbonated.

Therefore, it is an object of the present invention, described in the following paragraph, the development of a procedure to obtain some granules for the manufacture of tiles, through a dry process, with a lower water consumption during the mixing of raw materials, a lower energy consumption in the drying of granules, as the reduction of time during the firing cycles. It is more environmentally friendly, wanting to reduce the emission of CO₂, developing a procedure as described below. Its essence is compiled in the first claim.

The result of a research work in which the described procedure was applied, it has been proved specifically that a more efficient granulate could be created by using calcium calcined in a process of dry grinding. However, it must be assumed that any technique that allows adding calcined raw materials (with the prior extraction of the CO₂) would result in the obtention of all the advantages raised.

Thus, the invention consists in adding decarbonated raw materials, regardless of its adding process.

### DESCRIPTION OF THE INVENTION

It is an object of the present invention the use of calcined products in the production of granules through any kind of preparation procedure by dry process, of granulate for the further manufacture of ceramic.

The dry process entails the following stages:
- Dry milling and mixing of raw materials
- Adding calcined products that can be hydrated and unhydrated
- Granulation
- Obtention of the optimum humidity through dry process, for the pressing of granules and obtention of raw ceramic piece, prior to the firing process.

The main raw materials used, as they are not exclusive, would entail:
- calcareous clays,
- non-calcareous clays,
- feldspar,
- quartz
- kaolin
- calcite
- dolomite
- Calcined product as such, or mixed with one or several of the previous raw materials.

Water is a necessary element that works as binder to achieve the amalgamation of the raw materials which will be granulated, providing to the resulting granules the needed deformability so as to be able to generate the raw piece from pressure in their mould, before the firing cycle begins. The amount of water required may vary between 1 to 20% by weight of the mixture of raw materials to granulate. This process is called dry process, versus the known process of granulation through wet process, explained in the previous paragraph, which uses around 54% by weight of water, in relation to the mixture of dry raw materials.

The calcined products, are applicable in the granulation process through dry process, and they could be products such as the calcined dolomite, hydrated calcined dolomite, sintered dolomite, quicklime, calcium hydroxide, sintered lime or any mixture of any of the above. It is an alternative process to obtain granules, which, first of all, uses a much lower amount of water.

The dehydration of hydroxide takes place, preferably, but not limited to, at a temperature of about 500°C at which the water of hydration evaporates.

Due to using calcined products, as added material, together with the rest of raw materials, it is achieved:
- That the volumes of water needed to create the granules through dry process, the energy to dry the granules at an optimum humidity for its appropriate pressing in mould, and the firing cycles, are significantly reduced. Therefore, thanks to this procedure, an important cost saving is achieved as the evaporation of a high volume of water is not required due to the reduction of the energy to dry the granules, and the optimization of the firing cycle circumventing the decarbonation stage, required through wet process.
- That during the firing cycle, the process of obtention of the oxide by dehydration of the hydroxide takes place at a temperature of about 500°C, implying saving energy, compared to the 900°C temperature of decarbonation, typical in the granules obtained through a wet process.
- That in the process of dehydration of the hydroxide, steam is emitted to the atmosphere, instead of CO₂, as occurs in the process to obtain granules for the manufacture of tiles through wet process, by the decarbonation of the limestone at 900°C, with the economic and environmental cost that the emission of CO₂ implies.
- While, in this process to obtain granules through dry process the loss of mass is caused by steam, around 24% of mass, in comparison with the amount of calcium hydroxide supplied, through wet process, the loss of mass is CO₂, around 44% in relation to the amount of carbonate supplied. Thus, through dry process a lower loss of mass occurs, at a lower temperature, with the emission of steam instead of CO₂.

### PREFERABLE IMPLENTATION OF THE INVENTION.

The process of manufacture of granules through dry process, for the manufacture of tiles entails the following stages:
- Dry milling and mixing of raw materials. Raw materials used would include:
   calcareous clays, non-calcareous clays, feldspar, quartz, kaolin, calcite, dolomite and calcined products.
- Adding hydrated and not hydrated calcined products, such as: calcined dolomite, hydrated calcined dolomite, sintered dolomite, quicklime, calcium hydroxide, sintered lime, or any mixture of the above. They can also be included mixed with calcite or dolomite.
- Granulation
- Obtention of the optimum humidity by drying, for further pressing of the granule in optimal conditions.

The granules obtained through dry process have a similar composition to the granules obtained through wet process, that is to say, calcareous and non-calcareous clays, feldspar, quartz, kaolin, calcite, dolomite, and calcined products, or mixtures of the above with calcined products, obtaining solid granules, instead of the characteristic hollow granules resulting from the spray process through wet process.

Being sufficiently described the nature of the present invention, as well as the method of implementing it, it is stated that, in its essence, it can be implemented through other methods of implementation that differ in the level of detail from the one mentioned as an example, covered by the protection provided, as long as it does not alter, change or modify its fundamental principle.

## Claims

1. Procedure to obtain granules for the manufacture of ceramic tiles, characterised because of entailing the following stages:
- Dry milling and mixing of raw materials
- Adding calcined products
- Granulation.
- Obtention of the optimum humidity through dry process, for the subsequent pressing of granules in optimal conditions.

2. Procedure to obtain granules for the manufacture of tiles, according to claim 1 **characterised by** the raw materials used. They entail or have a chemical composition equal to:
- Calcareous clays,
- Non-calcareous clays,
- Feldspar,
- Quartz
- Kaolin
- Calcite
- Dolomite
- Calcined product as such, or mixed with one or several of the previous raw materials.

3. Procedure to obtain granules for the manufacture of tiles, according to claim 1 with the characteristic that the amount of water needed for its granulation is between 1% and 20% by weight of the mixture of raw materials to granulate.

4. Procedure to obtain granules for the manufacture of tiles, according to claim 1 with the characteristic that the calcined products in case of being hydrated may be any of the following products: calcined dolomite, hydrated calcined dolomite, sintered dolomite, quicklime, calcium hydroxide, sintered lime, or any mixture of the above, which could even include calcite or dolomite.

5. Granules for the manufacture of tiles with a composition of calcareous and non-calcareous clays, feldspar, quartz, kaolin, calcite, dolomite, and calcined products, with the characteristic of having a solid structure, without a hollow core.
